# EUROPEAN PATENT APPLICATION

(11) **EP 4 385 722 A1**
(43) Date of publication of application: **19.06.2024**
(21) Application number: 22213654.1
(22) Date of filing: 14.12.2022
(51) Int. Cl.: B32B 5/02, B32B 27/28, B32B 27/12, B32B 27/20, B32B 19/00, B32B 19/08, B32B 27/30, B32B 27/08

(54) **THREE LAYER THERMAL PROTECTION FILM CONSISTING OF FILLED SILICONE, GLASS CLOTH AND ADHESIVE LAYER**

(71) Applicant: 3M Innovative Properties Company, St. Paul, MN 55133-3427 (US)
(72) Inventor: Klünker, Eike, 41453 Neuss (DE); Romanko, Walter R., St. Paul, MN, 55133 (US); Ohligs, Maximilian, St. Paul, MN, 55133 (US); Rosen, Kerstin Christina, 41453 Neuss (DE); Schaschke, Martin, 41453 Neuss (DE); Rohmann, Anja Christina, 41453 Neuss (DE); Habbe, Andrea, 41453 Neuss (DE); Konietzny, Roman, 41453 Neuss (DE); Priolo, Morgan A., St. Paul, MN, 55133 (US); Kazuhiko, Mizuno, 2525285 Sagamihara (Kanagawa) (JP); Yoritsugo, Ito, 2520804 Fujisawa-shi (Kanagawa) (JP)
(74) Representative: Mathys & Squire

(57) **Abstract**

In one aspect of the present disclosure, there is provided a multilayer thermal protection article, the article having a first major surface and a second major surface opposing the first major surface, the article comprising
(i) a first layer comprising an inorganic woven or non-woven fiber sheet;
(ii) a second layer adjacent to the first layer, the second layer comprising (a) at least one silicone compound and (b) at least one silicate compound and/or at least one silicon oxide compound; and
(iii) a third layer adjacent to the second layer, the third layer comprising at least one adhesive layer.

## Description

### Technical Field

The present disclosure relates to a thermal protection article which exhibits certain adhesive properties. The present disclosure further provides a method for preparing a thermal protection article. Further, the present disclosure relates to the use of the thermal protection film for the prevention or mitigation of a thermal runaway event in a battery. Finally, the present disclosure provides a battery module and a battery comprising the thermal protection article as described herein.

### Background

Batteries based on lithium ion technology are currently the preferred solution for automotive e-mobility. Usually, multiple lithium ion cells are stacked in a row forming a battery module. In common automotive applications, a battery consists of multiple modules within a housing.

Such lithium ion batteries have an operating window between room temperature and about 40 °C. Above a temperature of from about 80 to 100 °C, there is a risk of uncontrolled electrolyte decomposition followed by additional heat and pressure increase inside the cell. Finally, the separator in the cell will melt and the resulting internal shortcut leads to excessive heat increase called thermal runaway. This also leads to an abrupt and significant increase of gas pressure within the cells, which may break or rupture the cells, leading to hot gases being blown out of the cells at temperatures above 1200 °C, which on top may ignite outside the cell and lead to damage of the surrounding cells, with the same outcome. Of course, this scenario is of great concern in construction of modern electrical vehicles, in particular automobiles. Recent regulations and legislations have already taken account on this, calling for a minimum time after occurrence of a thermal runaway event in which the passengers may leave the vehicle safely.

Therefore, there exists a desire in the art for materials which may stop or at least significantly slow down such a thermal runaway, i.e. which exhibits a certain resistance to towards heat and blast, mechanical strength, and/or is easily accessible, and easy to manufacture, transport and apply. It would be also desirable if the provides certain thermal and electrical insulation. Furthermore, it is desirable that the material may be easily attached to the components to be protected and securely fixed in position.

### Summary

The present disclosure provides a multilayer thermal protection article, the article having a first major surface and a second major surface opposing the first major surface, the article comprising
(i) a first layer comprising an inorganic woven or non-woven fiber sheet;
(ii) a second layer adjacent to the first layer, the second layer comprising (a) at least one silicone compound and (b) at least one silicate compound and/or at least one silicon oxide compound; and
(iii) a third layer adjacent to the second layer, the third layer comprising at least one adhesive layer.

The present disclosure further provides a battery casing, comprising the thermal protection article as described herein.

Furthermore, the present disclosure provides a method for producing a multilayer thermal protection article, the method comprising the following steps:
(a) Providing woven or non-woven cloth or fabric comprising inorganic fibers;
(b) Coating a silicone precursor composition comprising (a) at least one silicone compound precursor and (b) least one silicate compound and/or at least one silicon oxide compound onto a major surface of the woven-or non-woven cloth or fabric comprising inorganic fibers;
(c) Allowing the silicone precursor composition to cure, thereby obtaining a two-layer article comprising a first layer comprising a woven or non-woven cloth or fabric comprising inorganic fibers, and second layer comprising (a) at least one silicone compound and/or at least one silicon oxide;
(d) Treating the major surface of the second layer opposite the major surface adjacent the first layer;
(e) Laminating an adhesive layer onto the corona-treated surface of the second layer; thereby obtaining a multilayer thermal protection article.

Finally, the present disclosure provides a use of the thermal protection article for the prevention or mitigation of a thermal runaway event in a battery.

### Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e.g., 1 to 10 includes 1.4, 1.9, 2.33, 5.75, 9.98, etc.). Also herein, recitation of "at least one" includes all numbers of one and greater (e.g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items. Furthermore, it is understood that the term "comprise" as used herein may also embrace the term "consists of" in the sense of "consists only of", but in general is used according to its meaning generally used in the art. Hence, limiting down "comprise" to "consists of" or "comprising" to "consisting of" is fully embraced in the present disclosure.

Amounts of ingredients of a composition may be indicated by % by weight (or "% wt". or "wt.-%") unless specified otherwise. The amounts of all ingredients gives 100 % wt unless specified otherwise. If the amounts of ingredients is identified by % mole the amount of all ingredients gives 100% mole unless specified otherwise.

In the context of the present disclosure, the terms "room temperature" and "ambient temperature" are used interchangeably and refer to a temperature of 23 °C (± 2 °C) at ambient pressure condition of about 101 kPa.

Unless explicitly stated otherwise, all embodiments and optional features of the present disclosure can be combined freely.

The present disclosure provides a multilayer thermal protection article, the article having a first major surface and a second major surface opposing the first major surface, the article comprising
(i) a first layer comprising an inorganic woven or non-woven fiber sheet;
(ii) a second layer adjacent to the first layer, the second layer comprising (a) at least one silicone compound and (b) at least one silicate compound and/or at least one silicon oxide compound; and
(iii) a third layer adjacent to the second layer, the third layer comprising at least one adhesive layer.

The thermal protection article according to the present disclosure may exhibit at least one or even a combination of desirable properties such as good handling properties, cheap and easy production, non-toxic, the ability to be bend and shaped, and the ability to withstand high temperatures, in particular when high temperatures and/or a stream of particles and/or gases are inflicted only locally or on small areas of the battery composite construction. In particular, the fact that the protection film as described herein is in the form of a silicone film gives rise to the advantage that the protection film is flexible, easy to handle, easy transportable, easy to apply even by means of fast robotic equipment, and may be shaped into other shapes desirable for producing battery modules or batteries. Furthermore, silicone films would usually not withstand the high temperatures and/or blasts encountered during thermal runaway events in modern lithium ion batteries used in particular in the automotive industry. However, using silicate compounds and/or silicon oxide compounds in the amounts as described herein, it became possible to provide protection films that actually withstand this challenging influences at least over a certain period of time. Furthermore, the at least one adhesive of the thermal protection article makes the film easily attachable to the components to be protected, where it will also remain fixed in position. Finally, the first layer comprising an inorganic woven or non-woven fiber sheet provides the article as described herein with improved blast protection, i.e. against a high-velocity stream of gases and particles hitting the surface of the article.

Accordingly, the protection film according to the present disclosure is highly suitable for mitigating or even preventing the high-temperature and high-velocity outbursts which typically occur during a thermal runaway event in a modern battery, e.g. a lithium ion battery used in modern vehicles. It is also highly suitable to be employed into manufacturing processes of battery cells, battery modules and batteries on industrial scale due to its abilities to being safely and easily transported, cut and shaped into the forms desired, and applied onto the substrates and fixed into positions.

The thermal protection article according to the present disclosure may be provided in common forms and shapes known and appreciated in the art. Thus, films which may be provided in rolls or sheets. Also, die cuts are possible. Due to its advantageous combination of desirable properties, the thermal protection article as described herein is excellently suited for preventing or mitigation a thermal runaway event in a battery such as a lithium ion battery. High-capacity lithium ion batteries find increasing use in the automotive industry and play a significant role in present automotive electrification intended to replace combustion engines. Accordingly, the multilayer thermal protection article according to the present disclosure is well-suited for these applications. Therefore, it is preferred that the thermal protection article as described herein is a thermal protection article for a battery, preferably a lithium ion battery or a solid-state battery, more preferably for a lithium ion battery. In this regard, it is preferred that the multilayer thermal protection article as described herein is a multilayer thermal runaway protection article.

In general, the thermal protection article as described herein comprises a first layer comprising inorganic woven or non-woven fibers. This has the effect of an improved blast protection performance compared to an article comprising only the second and third layers as described herein. Blast protection performance may be described as protection towards a stream of gases and particles. In most cases, gases and/or particles are hot. This is in particular the case in a so-called thermal runaway event in a high-capacity lithium ion battery. Furthermore, this may also contribute to thermal and electrical insulation of the multilayer thermal protection article according to the present disclosure. Preferably, the inorganic woven or non-woven fibers first layer are selected from glass fibers, ceramic fibers, metal fibers, polycrystalline fibers, mineral fibers, carbon fibers, graphite fibers, asbestos fibers, aramide fibers, basalt fibers, mineral wool, and any combinations and mixtures thereof. In this regard, it is preferred that the inorganic fibers are selected from glass fibers. While glass fibers are not only readily commercially available, it was found that they are also able to provide good blast protection. Preferably, the first layer comprises a woven on non-woven cloth or fabric. In particular, it is preferred that the non-woven or woven cloth or fabric is a woven or non-woven glass cloth or glass fabric. It was found that this provides very good blast performance while also makes sure that the multilayer thermal protection article as described herein also exhibits good handling and application properties. Woven or non-woven glass fabrics or glass clothes having a weight per square centimeter in the range of from 20 to 2000 gsm, more preferably from 50 to 1000 gsm and even more preferably from 100 to 800 gsm are particularly preferred. This has the advantage that a balance between thermal protection, blast protection and flexibility of the multilayer thermal protection article as described herein is maintained. Regarding the thickness, it is preferred that the first layer, preferably the woven or non-woven glass fabric or glass cloth exhibits a thickness in the range of from 0.01 mm to 2 mm, more preferably from 0.05 to 1 mm and even more preferably from 0.1 to 0.8 mm. While lower thicknesses may not be able to provide substantial blast protection, higher thickness may lead to undesirably high stiffness of the multilayer thermal protection article. Furthermore, the major surface of the first layer adjacent to the major surface of the second layer may preferably comprise at least one adhesive. This has the effect that adhesion of between first and second layers may be improved.

In general, the thermal protection article as described herein comprises a second layer adjacent to the first layer, the second layer comprising (a) at least one silicone and (b) at least one silicate compound and/or a silicon oxide mineral filler. The second layer as disclosed herein may consist of one silicone layer, however, second layers consisting of several silicone layers are also considered. The silicone layers may have the same constitution or thickness or have different constitutions or thicknesses. The at least one silicate compound and/or the silicon oxide mineral filler is preferably contained in the second layer in an amount of at least 40 wt.-%, based on the total weight of the second layer. This amount is preferably higher, i.e. wherein the second layer comprises at least 45 wt.-% of the at least one silicate compound and/or a silicon oxide mineral filler, preferably of at least 50 wt.-%, more preferably of at least 60 wt.-%, based on the total weight of the second layer. High loadings with silicate compound into the silicone matrix of the second layer offer improved mechanical, chemical and temperature resistance, while the general characteristics of the silicone film are preserved. In particular, the films may still be bendable, rollable, and be flexible in general. This is particularly advantageous for production, storage, and application of the film as well as desirable for many applications or the thermal protection articles as described herein. Preferably, the thermal protection articles according to the present disclosure the at least one silicate and/or a silicon oxide mineral filler compound is contained in the second layer in an amount of up to 85 wt.-%, preferably of up to 80 wt.-%, more preferably 77.5 wt.-% based on the total weight of the second layer.

The at least one silicate compound and/or at least one silicon oxide compound is not particularly limited, as long as it is compatible with the at least one silicone, and provides the desirable effects of improved thermal and mechanical resistance of the protection layer. Best results were found in kaolin, metakaolin, mullite, wollastonite, an aluminium oxide silicon oxide mineral filler, and any combinations and mixtures thereof. Of these compounds, mullite and an aluminium oxide silicon oxide mineral filler yielded the best temperature resistance. Hence, it is preferred that the at least one silicate compound and/or at least one silicon oxide compound is selected from kaolin, metakaolin, mullite, wollastonite, an aluminium oxide silicon oxide mineral filler and any combinations and mixtures thereof, preferably metakaolin, mullite, wollastonite, an aluminium oxide silicon oxide mineral filler and any combinations and mixtures thereof, and more preferably mullite, wollastonite and/or an aluminium oxide silicon oxide mineral filler, even more preferably mullite and/or an aluminium oxide silicon oxide mineral filler. A suitable aluminium oxide silicon oxide mineral filler is commercially available under the trade designation "Kormullit". The second layer of the thermal protection article of the present disclosure may further comprise at least one inorganic fiber material, at least one fire retardant compound, at least one further inorganic filler material, and any combinations and mixtures thereof. This may have the effect of yet improved mechanical strength, improved blast protection, and/or improved fire and/or smoke retardant properties. Preferably, the at least one inorganic fiber material is selected from glass fibers, ceramic fibers, mineral fibers, aramide fibers, preferably from ceramic fibers. The at least one fire retardant compound is preferably selected from inorganic phosphorous compounds, preferably red phosphorous or encapsulated red phosphorous, organic phosphorous compounds, preferably selected from organophosphonates, (preferably triphenyl phosphate, resorcinol bis(diphenylphosphate), bisphenol A diphenylphosphate, tricresyl phosphate,), organophosphonates (preferably dimethyl(methylphosphonate), and phosphinates, preferably metal phosphinates, preferably metal selected from aluminium, iron, kalium, calcium, sodium, preferably phosphinates selected from diethyl phosphinate, dimethylphosphinate, dipropylphosphinate, dibutylphosphinate, diphenylphosphinate, preferably aluminium diethylphosphinate, aluminium trihydrate, boron hydroxide, and any combinations and mixtures therefrom. The at least one further inorganic filler material is preferably selected from fumed silica, magnesium carbonate, calcium carbonate, calcium hydroxide, potassium hydroxide, sodium hydroxide, potassium carbonate, sodium carbonate, magnesium hydroxide, and any combinations and mixtures thereof.

The at least one silicone as used herein is not particularly limited, as long as stable films may be generated thereby. Silicones for this purpose are well-known in the art and readily commercially available, even in large amounts for industrial purposes. The silicone may also be selected with regard to the desired properties of the protection film and the intended application. Preferably, the at least one silicone as used herein is selected from silicone rubbers. The silicone rubber may be a two-component or one-component silicone. For instance, silicone/silicone rubbers for use herein are commercially available from Wacker Chemie AG und the trade designation SilGel, such as Wacker SilGel 612 A/B.

It was also found that the addition of at least one endothermal filler to the second layer as described herein may be advantageous. Endothermal fillers have the effect of absorbing the heat emitted by a thermal runaway event and may therefore be able to at least partially and locally lower the temperature. This may be advantageous in that the thermal protection article as described herein may last longer, and/or the temperature of the backside of the article may be lower as opposed to an article not containing any endothermal fillers. Accordingly, it is preferred that the second layer further comprises at least one endothermal filler. In addition to or as an alternative, the thermal protection article as described herein may further comprise at least one additional layer comprising at least one endothermal filler, preferably wherein the at least one additional layer comprises silicone rubber. In this regard, it is preferred that the at least one endothermal filler is selected from sodium metasilicate pentahydrate, ammonium dihydrogen phosphate, inorganic carbonates, preferably calcium magnesium carbonates and calcium silicon magnesium carbonates, metal hydroxides, preferably aluminium hydroxide and magnesium hydroxide, mineral compounds comprising water of crystallisation, preferably aluminium hydroxide, magnesium carbonate, magnesium oxide, Mg(OH)₂ 4 MgCO₃ 4H₂O, MgCl₂ 5Mg(OH)₂ 7H₂O, and any combinations and mixtures thereof.

It was further found that adding inorganic fillers having a low density and/or low thermal conductivity to the second layer of the thermal protection article as described herein may be advantageous. In particular, lower densities may be advantageous in lowering the weight of the protection film, and materials of low thermal conductivity may have the advantage of providing a protection film which offers a certain thermal insulation and protection, respectively. Accordingly, it is preferred that the second layer comprises inorganic fillers having a low density and/or low thermal conductivity. In this regard, it is preferred that the inorganic fillers have a thermal conductivity TC at 25 °C according to ASTM D5470 of less than 0.2 W/m K, preferably less than 0.15 W/m K, and more preferably less than 0.1 W/m K, and even more preferably less than 0.8 W/m K. It is further preferred that the inorganic fillers have a thermal conductivity TC at 25 °C according to ASTM D5470 of more than 0.001 W/m K. With regard to density, it is preferred that the inorganic fillers exhibit a bulk density of less than 3.5 g/cm³, preferably less than 3.2 g/cm³, and more preferably less than 3 g/cm³. While any inorganic material may be used which falls under these parameters, it is preferred that inorganic fillers are selected from diatomaceous earth, perlite and fumed silica and any combinations and mixtures thereof. These compounds are readily available in large amounts, are non-toxic and compatible with the at least one silicate compound as well as with the silicone rubber in the at least one protection layer as described herein. Preferably, the inorganic filler and the at least one silicate compound are contained in the second layer in a total amount as defined in any one of claims 1 to 3. In summary, it is desirable to have a thermal protection article having a low thermal conductivity. This may be achieved by the multilayer thermal protection articles according to the present disclosure. Hence, the multilayer thermal protection articles as described herein may advantageously exhibit a thermal conductivity ASTM D5470 of less than 1 W/m K, preferably less than 0.8 W/m K, and more preferably less than 0.7 W/m K.

Furthermore, it is preferred that the major surface of the second layer adjacent to the third layer is surface treated, preferably Corona treated or plasma treated. This is particularly advantageous since adhesion between the second and third layer may be greatly improved, which gives rise to a particularly robust and stable multilayer thermal protection article. This has the further advantage that no particular additional adhesive between second and third layer may be required, which is particularly advantageous when manufacturing or assembling the multilayer thermal protection article according to the present disclosure. Similarly, corona treatments and plasma treatments of polymer surfaces are well-known to the skilled person and well-established in the art, also with regard to large-scale manufacturing operations.

The thermal protection article according to the present disclosure comprises at least one adhesive layer. In other words, the thermal protection article as described herein comprises a third layer adjacent to the second layer and comprises at least one adhesive. That is, the adhesive layer or third layer comprises at least one adhesive which is chemically distinct from the silicone of the protection film. This has the advantage that the adhesive properties may be adapted and selected according to the intended use or substrate. That is, bonding to a broad variety of materials apart from metal surfaces becomes possible, e.g. to polymer, glass, ceramic, carbon fiber, or glass fiber material surfaces. Preferably, the at least one adhesive layer comprises at least one adhesive selected from a silicone adhesive, a pressure sensitive adhesive, a structural adhesive, a liquid adhesive, a paste adhesive, and any combinations thereof. It is preferred that the at least one adhesive layer comprises an adhesive film or adhesive tape. A silicone adhesive may have the advantage of good compatibility with the silicone protection layer as well as with most metal substrates. Preferably, the silicone adhesive comprises at least one polysiloxane, and optionally at least one tackifier. Silicone adhesives and corresponding tackifiers are well-established in the art and may be easily selected by the skilled person in accordance with the silicone protection films as described herein and the substrate. Preferably, the at least one adhesive layer comprises a silicone transfer adhesive. A silicone transfer adhesive film is available from 3M Company under the designation 3M 91022. Further, a pressure sensitive adhesive is very advantageous with regards to ease of application and quick fixation of the protection films as described herein into position. This is particularly advantageous for industrial manufacturing processes, either manually or even by means of quick robotic equipment. Accordingly, it is preferred that the at least one adhesive layer comprises at least one pressure sensitive adhesive. The at least one pressure sensitive adhesive may be selected from silicone pressure sensitive adhesives and silicone-free pressure sensitive adhesives, preferably from silicone-free pressure-sensitive adhesives. Pressure sensitive adhesives, also in form or films or tapes, are well-known in the art. Preferably, the pressure sensitive adhesive is selected from styrene block copolymers, styrene-butadiene-styrene, styrene-ethylene/butylene-styrene, styrene-ethylene/propylene, styrene-isoprene-styrene butyl rubbers, ethylene-vinyl acetates, (meth)acrylates, nitriles, vinyl ethers, and optionally comprising at least one tackifier. Furthermore, structural adhesives may be advantageous due to the strong adhesive bonds being formed. Structural adhesives, also in the form of films and tapes, are well-established in the technical field of industrial adhesive technology, in particular in manufacturing operations in automotive, industrial transportation and aerospace. Preferably, the structural adhesive comprises at least one epoxy resin and at least epoxy curing agent. In general, the third layer may comprise or essentially consist of an adhesive film or an adhesive tape. The third layer may also comprise a liner atop of its major surface facing away from the protection layer of the protection films according to the present disclosure.

The major surface of the third layer adjacent to the second layer may advantageously surface treated, preferably Corona treated or plasma treated. This is particularly advantageous since adhesion between the second and third layer may be greatly improved, which gives rise to a particularly robust and stable multilayer thermal protection article. This has the further advantage that no particular additional adhesive between second and third layer may be required, which is particularly advantageous when manufacturing or assembling the multilayer thermal protection article according to the present disclosure. Similarly, corona treatments and plasma treatments of polymer surfaces are well-known to the skilled person and well-established in the art, also with regard to large-scale manufacturing operations.

In a preferred exemplary embodiment of the multilayer thermal protection article according to the present disclosure, the first layer is a non-woven or woven glass cloth or glass fabric, in the second layer the (a) at least one silicone compound is a silicone rubber and the (b) at least one silicate compound and/or at least one silicon oxide compound is comprising mullite, the major surface of the second layer adjacent to the third layer is corona treated, and the third layer comprises at least one pressure sensitive adhesive.

It is further preferred that the multilayer thermal protection article according to the present disclosure further comprises a fourth layer adjacent to the third layer opposite to the major surface adjacent to the second layer, wherein the fourth layer comprises or preferably constitutes a liner. This has the effect that the major surface of the third layer constituting the outer layer of the multilayer thermal protection article is protected against physical and/or chemical influences which may be detrimental to the surface and, penultimately, to the adhesive properties of the article. Detrimental physical influences may comprise damage by cutting, bumping, bruising, and the settlement of dirt or dust. Also, sunlight and open air may also have undesired aging effects to the adhesive surface. Chemical influences may comprise humidity, water, or exposure to solvents or solvent-containing vapours oftentimes encountered in manufacturing sites or workshops. Liners itself are well-known to the skilled person and well-established in the art. Preferably, the liner as described herein comprises a polymer selected from poly(methyl methacrylates, acrylonitrile butadiene styrenes, polyamides, polylactic acids, polybenzimidazoles, polycarbonates, polyesters, polyethers polyether sulfones, polyoxymethylenes, polyetherimides, polyethylenes, polyphenylene oxides, polyphenylene sulfides, polypropylenes, polyvinyl chlorides, polyvinylidene fluorides, polyethyleneterephthalates, and polytetrafluorethylenes.

The multilayer thermal protection article according to the present disclosure preferably has a thickness of at least 0.1 mm, preferably at least 0.2 mm, and more preferably 0.5 mm. It is also preferred that the protection film as described herein has a thickness of up to 3 mm, preferably up to 2.5 mm, and more preferably up to 2. mm. Preferably, the protection film has a thickness in the range of from 0.1. to 3 mm, preferably from 0.2 to 2.5 mm, more preferably from 0.5 to 2 mm. Lower thicknesses may not be able to provide the desired protection in case of a thermal runaway event, and higher thicknesses may be deemed unpractical for many applications. In general, it is also preferred that the multilayer thermal protection article as described herein exhibits an area weight of at least 900 g/m², more preferably of at least 1000 g/m², more preferably of at least 1100 g/m², and even more preferably of at least 1200 g/m². Preferably, the multilayer thermal protection article exhibits an area weight of up to 8000 g/m², preferably of up to 7000 g/m², more preferably of up to 6000 g/m². Hence, it is preferred that the multilayer thermal protection article as described herein exhibits an area weight in the range of from 900 to 8000 g/m², preferably from 1000 to 7000 g/m², more preferably from 1100 to 6000 g/m². The multilayer thermal protection article according to the present disclosure advantageously may provide thermal insulation. Also, the multilayer thermal protection article as described herein may further provide electrical insulation against arcing. Both thermal insulation and electrical insulation against arcing are very advantageous in a thermal runaway event in a lithium ion battery or battery module. In this regard, it is preferred that the multilayer thermal protection article exhibits a dielectrical breakdown strength direct current according to DIN EN ISO 60243-2 (DC) in the range of from 1 to 20 KV/mm.

The multilayer thermal protection article according to the present disclosure may be provided in the form of a sheet or wound up in a roll, preferably a level-wound roll. The latter is particularly advantageous since it is suited for applications by automated, in particular fast robotic equipment, which is highly desirable for large scale industrial manufacturing operations.

The present disclosure also provides a battery module, comprising the multilayer thermal protection article according to the present disclosure, and a, comprising the multilayer thermal protection article or the lithium ion battery module as described herein. Preferably, the battery module is a lithium ion battery module. The at least one multilayer thermal protection article may be located under the lid, between the cells, encapsulates the battery cells, and/or may be comprised in the module cover and/or module housing. Preferably, the at least one multilayer thermal protection article comprises vent orifices. This may have the effect that in case of a thermal event in a battery, such as a thermal runaway event, gases may be vented from the broken cell or module in a controlled manner. Preferably, the battery is a lithium ion battery or a solid state battery, preferably a lithium ion battery.

Furthermore, the present disclosure provides a method for producing a multilayer thermal protection article, the method comprising the following steps:
(a) Providing woven or non-woven cloth or fabric comprising inorganic fibers;
(b) Coating a silicone precursor composition comprising (a) at least one silicone compound precursor and (b) least one silicate compound and/or at least one silicon oxide compound onto a major surface of the woven-or non-woven cloth or fabric comprising inorganic fibers;
(c) Allowing the silicone precursor composition to cure, thereby obtaining a two-layer article comprising a first layer comprising a woven or non-woven cloth or fabric comprising inorganic fibers, and second layer comprising (a) at least one silicone compound and/or at least one silicon oxide;
(d) Treating the major surface of the second layer opposite the major surface adjacent the first layer;
(e) Laminating an adhesive layer onto the corona-treated surface of the second layer; thereby obtaining a multilayer thermal protection article.

It is understood that the materials, amounts, thicknesses and other parameters as disclosed herein in conjunction with the first layer, second layer, and third layer and the multilayer thermal protection article as described herein also apply without restriction to the method according to the present disclosure. Compounding the at least one silicate compound into silicone, preferably silicone rubber, may be carried out by means well-established in the art. Forming the second layer may be carried out by applying the silicone composition by means of spraying, calandering, coating, printing or applying by doctor blade the silicone composition onto the first layer. Next, after allowing the second layer to cure in step (c), the major surface of the second layer is treated. It is understood that the preferred treatment is the corona treatment or plasma treatment as described herein. Next, the third layer is applied. In this regard, it is preferred that an adhesive film or adhesive tape is attached on the treated surface of the second layer.

Finally, the present disclosure provides a use of the multilayer thermal protection article as described herein for the prevention or mitigation of a thermal runaway event in a lithium ion battery. Due to its unique combination of desirable properties, a further use of the multilayer thermal protection article as described herein is the use for manufacturing a battery. Preferably, the multilayer thermal protection article as described herein is used in automotive industry, the commercial transportation industry, the aerospace industry, the construction industry, or the marine/shipping industry, application. In particular, it is preferred that the battery is a battery of a vehicle, a building, or a bicycle. The multilayer thermal protection article as described herein is preferably used in a cell, a module, and/or a battery. For instance, the multilayer thermal protection article may advantageously be arranged around a cell, a module, or a battery, or between cells or modules in a battery, or under the lid of a battery. Preferably, the battery is a lithium ion battery or a solid state battery, preferably a lithium ion battery.

### Examples

The present disclosure is further described without however wanting to limit the disclosure thereto. The following examples are provided to illustrate certain embodiments but are not meant to be limited in any way. Prior to that some test methods used to characterize materials and their properties will be described. All parts and percentages are by weight unless otherwise indicated.

### Test Methods

### Torch and Grit Test (T&GT)

Each sample was mounted to a 1.5 mm thick aluminum sheet. The sample was positioned 44.5 mm from the nozzle of a Champion Bench hydrogen torch burner obtained from Bethlehem Apparatus Company Inc, of Hellertown, PA, USA. A thermocouple (TC0) was positioned at a distance of 31.8 mm from the nozzle of the burner and another was placed on the backside center of the steel sheet. A blaster gun was loaded with 120 grit aluminum oxide non-shaped media and aligned with the nozzle of the torch at the same distance (44.5 mm) from the sample. The torch of the Champion Bench Burner was adjusted to 1200 °C. The media blaster gun was then triggered at 172.4 kPa or 344.7 kPa. A sample was either: 1) exposed to 12 blast cycles each lasting 15 seconds with 10 seconds of active blast time and 5 seconds of inactive blast time at a target location or 2) exposed to 1 blast cycle lasting 20 seconds with 5 seconds of inactive blast time, followed by 10 seconds of active blast, and then 5 seconds of inactive blast time at three target locations spaced 38.1 mm (1.5 inches) apart. Sample testing was stopped if a hole caused by either burn through or the media blasts was visible in the layers of the barrier article.

### Dielectric strength test

Dielectric strength of the material was determined in accordance with DIN EN 60243-2 35 with direct current. The results were determined as KV/mm.

### Pyrotechnic Test

Each sample was attached to a 1.5 mm thick aluminum sheet. The sample was placed in a fixture so that it was located 30 mm above a vertically constrained pyrotechnic gerb. The pyrotechnic was a LeMaitre LMPP478 stage gerb with 20 second burn time and 15 ft fountain height. The pyrotechnic was ignited using a pyrotechnic controller and burned until it self-extinguished. The time it takes for the pyrotechnic to burn through the sample was measured and recorded. If the pyrotechnic did not burn through the sample, it was also record as such. Additional notes were made in the test reports summary if deemed appropriate.

### Materials

Glass cloth:

**Table 1: Glass cloths used.**

| **Glass cloth** | **Thickness (mm)** | **Base weight (g/square meter)** |
|---|---|---|
| HKO TG430CS | 0.4 | 430 |
| HKO TG200CS | 0.2 | 200 |
| JPS #1162 | 0.13 | 137 |

### Silicone:

A two-part room temperature vulcanizing silicone SilGel 612 A/B from Wacker, Germany was used.

### Filler:

A mullite was used as filler.

### Reference examples (used as Comparative Examples):

2-layer constructions consisting of glass cloth layer and adhesive transfer tape were prepared by laminating flame retardant pressure sensitive adhesive transfer tape ATP S 4610 FR to the different glass cloth materials using a hand roller (Ref1, Ref2, Ref3).

A 2-layer construction consisting of filled silicone layer and adhesive transfer tape was prepared by mixing 60 parts of Silgel 612 A Part with 40 parts of Silgel 612 B Part and 248 parts of Kormullit. The raw materials were mixed using a mixer from Typhoon. The silicone film precursor mixture was then coated with a knife coater between two Hostaphan PET liners. The coating gap was adjusted to 1200 micrometers. The resulting silicone film precursor material in between two liners was then cured in a convection oven at a temperature of 160 °C for 2.5 min. After curing both liners were stripped off and the final silicone layer/film was obtained. The final silicone film thickness was measured. The one surface of the silicone film was then treated with a Corona treatment. An energy of 8 J/square centimeter was disposed to the surface. After Corona surface treatment a flame-retardant transfer tape ATP S 4610 FR was laminated to the silicone layer using a hand roller. Resulting Reference Examples are Ref4, Ref5, Ref6.

### Examples:

3-layer constructions consist of glass cloth layer, filled silicone layer and adhesive layer. The filled silicone premix was prepared as described for Ref4, Ref5, Ref6 and then coated with a knife coater in between a glass cloth layer and the Hostaphan PET liner. Different coating gaps are set to produce different total thicknesses. The resulting silicone film precursor material in between PET liner and glass cloth was then cured in a convection oven at a temperature of 160 °C for 2.5 min. After curing the PET liner was stripped off and a filled silicone/glass cloth construction was obtained. The open surface silicone of the filled silicone/glass cloth construction was then treated with a Corona treatment. An energy of 8 J/square centimeter was disposed to the surface. After Corona surface treatment, a flame-retardant transfer tape ATP S 4610 FR was laminated to the open surface of the filled silicone/glass cloth construction using a hand roller. The final silicone film thickness was measured. Resulting Examples are Ex1, Ex2, Ex3, Ex4, Ex5 and Ex6.

Dielectric strength of the Examples and Comparative Examples (i.e. Reference Examples) was determined. The results are summarized in table 2. Table 3 contains the results of the torch and grit performance tests. Finally, the results of the pyrotechnic performance tests are summarized in table 4.

**Table 2: Dielectric strength data.**

| | **Sample Description** | **Thickness [mm]** | **Dielectric strength DC per thickness [kV/mm]** | |
|---|---|---|---|---|
| | | | **Average** | **Standard Deviation** |
| Ref1 | 2-layer construction: Glass cloth, 430gsm, HKO TG430CS with adhesive tape | 0.4 | 3.4 | 0.4 |
| Ref2 | 2-layer construction: Glass cloth, 200gsm, HKO TG200CS with adhesive tape | 0.2 | 4.1 | 0.4 |
| Ref3 | 2-layer construction: Glass cloth, 137gsm, JPS #1162 with adhesive tape | 0.13 | 3.7 | 1.0 |
| Ref4 | 2-layer construction: Filled silicone with adhesive tape | 1.59 | 23.4 | 1.0 |
| Ref5 | 2-layer construction: Filled silicone with adhesive tape | 1.58 | 26.2 | 1.8 |
| Ex1 | 3-layer construction: Glass cloth (430gsm, HKO TG430CS), filled silicone, adhesive tape | 1.06 | 44.6 | 1.4 |
| Ex2 | 3-layer construction: Glass cloth (430gsm, HKO TG430CS), filled silicone, adhesive tape | 1.18 | 29.6 | 1.8 |
| Ex3 | 3-layer construction: Glass cloth (430gsm, HKO TG430CS), filled silicone, adhesive tape | 1.41 | 31.9 | 8.1 |
| Ex4 | 3-layer construction: Glass cloth (430gsm, HKO TG430CS), filled silicone, adhesive tape | 1.54 | 25.6 | 2.5 |
| Ex5 | 3-layer construction: Glass cloth (430gsm, HKO TG430CS), filled silicone, adhesive tape | 1.71 | 27.8 | 1.0 |
| Ex6 | 3-layer construction: Glass cloth (430gsm, HKO TG430CS), filled silicone, adhesive tape | 1.87 | 25.2 | 2.3 |
| Ex7 | 3-layer construction: Glass cloth (430gsm, HKO TG430CS), filled silicone, adhesive tape | 1.59 | 23.7 | 3.1 |
| Ex8 | 3-layer construction: Glass cloth (430gsm, HKO TG430CS), filled silicone, adhesive tape | 1.17 | 31.1 | 3.4 |
| Ex9 | 3-layer construction: Glass cloth (430gsm, HKO TG430CS), filled silicone, adhesive tape | 1.59 | 24.0 | 0.5 |

**Table 3: Torch and grit performance data.**

| | **Sample Description** | **Thickness [mm]** | **# of blasts survived (-)** | |
|---|---|---|---|---|
| | | | **(-)** | **(-/mm)** |
| Ref1 | 2-layer construction: Glass cloth, 430gsm, HKO TG430CS with adhesive tape | 0.4 | 7 | 17.5 |
| Ref2 | 2-layer construction: Glass cloth, 200gsm, HKO TG200CS with adhesive tape | 0.2 | 1 | 5.0 |
| Ref3 | 2-layer construction: Glass cloth, 137gsm, JPS #1162 with adhesive tape | 0.13 | 1 | 7.7 |
| Ref4 | 2-layer construction: Filled silicone with adhesive tape | 1.59 | 4 | 2.5 |
| Ref5 | 2-layer construction: Filled silicone with adhesive tape | 1.58 | 4 | 2.5 |
| Ex1 | 3-layer construction: Glass cloth (430gsm, HKO TG430CS), filled silicone, adhesive tape | 1.06 | 7 | 6.6 |
| Ex2 | 3-layer construction: Glass cloth (430gsm, HKO TG430CS), filled silicone, adhesive tape | 1.18 | 7 | 5.9 |
| Ex3 | 3-layer construction: Glass cloth (430gsm, HKO TG430CS), filled silicone, adhesive tape | 1.41 | 16 | 11.3 |
| Ex4 | 3-layer construction: Glass cloth (430gsm, HKO TG430CS), filled silicone, adhesive tape | 1.54 | 10 | 6.5 |
| Ex5 | 3-layer construction: Glass cloth (430gsm, HKO TG430CS), filled silicone, adhesive tape | 1.71 | 16 | 9.4 |
| Ex6 | 3-layer construction: Glass cloth (430gsm, HKO TG430CS), filled silicone, adhesive tape | 1.87 | 10 | 5.3 |
| Ex7 | 3-layer construction: Glass cloth (430gsm, HKO TG430CS), filled silicone, adhesive tape | 1.59 | 16 | 10.1 |
| Ex8 | 3-layer construction: Glass cloth (430gsm, HKO TG430CS), filled silicone, adhesive tape | 1.17 | 16 | 13.7 |
| Ex9 | 3-layer construction: Glass cloth (430gsm, HKO TG430CS), filled silicone, adhesive tape | 1.59 | 16 | 10.1 |

**Table 4: Pyrotechnic performance data.**

| | **Sample Description** | **Thickness [mm]** | **Time until burn through in Pyrotechnic test [s]** |
|---|---|---|---|
| Ref1 | 2-layer construction: Glass cloth, 430gsm, HKO TG430CS with adhesive tape | 0.4 | 2.5 |
| Ex1 | 3-layer construction: Glass cloth (430gsm, HKO TG430CS), filled silicone, adhesive tape | 1.06 | 4.8 |
| Ex2 | 3-layer construction: Glass cloth (430gsm, HKO TG430CS), filled silicone, adhesive tape | 1.18 | 4.4 |
| Ex3 | 3-layer construction: Glass cloth (430gsm, HKO TG430CS), filled silicone, adhesive tape | 1.41 | 6.2 |
| Ex4 | 3-layer construction: Glass cloth (430gsm, HKO TG430CS), filled silicone, adhesive tape | 1.54 | 5.2 |
| Ex5 | 3-layer construction: Glass cloth (430gsm, HKO TG430CS), filled silicone, adhesive tape | 1.71 | 6.7 |
| Ex6 | 3-layer construction: Glass cloth (430gsm, HKO TG430CS), filled silicone, adhesive tape | 1.87 | 7.2 |

## Claims

1. A multilayer thermal protection article, the article having a first major surface and a second major surface opposing the first major surface, the article comprising
(i) a first layer comprising an inorganic woven or non-woven fiber sheet;
(ii) a second layer adjacent to the first layer, the second layer comprising (a) at least one silicone compound and (b) at least one silicate compound and/or at least one silicon oxide compound; and
(iii) a third layer adjacent to the second layer, the third layer comprising at least one adhesive layer.

2. The multilayer thermal protection article according to claim 1, wherein the at least one adhesive layer comprises at least one adhesive selected from pressure sensitive adhesives, structural adhesives, paste or liquid adhesives, preferably from pressure sensitive adhesives.

3. The multilayer thermal protection article according to claim 2, wherein the pressure sensitive adhesive is selected from styrene block copolymers, styrene-butadiene-styrene, styrene-ethylene/butylene-styrene, styrene-ethylene/propylene, styrene-isoprene-styrene butyl rubbers, ethylene-vinyl acetates, (meth)acrylates, nitriles, vinyl ethers, and optionally comprising at least one tackifier.

4. The multilayer thermal protection article according to any one of the preceding claims, wherein the article is a thermal protection article for a battery, preferably a lithium ion battery or a solid-state battery, more preferably for a lithium ion battery.

5. The multilayer thermal protection article according to any one of the preceding claims, wherein component (b) is contained in the second layer in an amount of at least 40 wt.-%, preferably at least 50 wt.-%, more preferably at least 60 wt.-%, based on the total weight of the at least one protection layer.

6. The multilayer thermal protection article according to any one of the preceding claims, wherein the major surface of the second layer adjacent to the third layer is surface treated, preferably Corona treated or plasma treated.

7. The multilayer thermal protection article according to any one of the preceding claims, wherein the inorganic woven or non-woven first layer comprises inorganic fibers selected from glass fibers, ceramic fibers, metal fibers, polycrystalline fibers, mineral fibers, carbon fibers, graphite fibers, asbestos fibers, aramide fibers, basalt fibers, mineral wool, and any combinations and mixtures thereof.

8. The multilayer thermal protection article according to claim 7, wherein the non-woven or woven cloth or fabric is a woven or non-woven glass cloth or glass fabric.

9. The multilayer thermal protection article according to any one of the preceding claims, wherein the at least one silicate compound and/or at least one silicon oxide compound of the second layer is selected from kaolin, metakaolin, mullite, wollastonite, an aluminium oxide silicon oxide mineral filler and any combinations and mixtures thereof, preferably metakaolin, mullite, wollastonite, an aluminium oxide silicon oxide mineral filler and any combinations and mixtures thereof, and more preferably mullite, wollastonite and/or an aluminium oxide silicon oxide mineral filler, even more preferably mullite and/or an aluminium oxide silicon oxide mineral filler.

10. The multilayer thermal protection article according to any one of the preceding claims, wherein the first layer is a non-woven or woven glass cloth or glass fabric, wherein in the second layer the (a) at least one silicone compound is a silicone rubber and the (b) at least one silicate compound and/or at least one silicon oxide compound is comprising mullite, wherein the major surface of the second layer adjacent to the third layer is corona treated, wherein the third layer comprises at least one pressure sensitive adhesive.

11. Method of preparing a multilayer thermal protection article, the method comprising the following steps:
(a) Providing woven or non-woven cloth or fabric comprising inorganic fibers;
(b) Coating a silicone precursor composition comprising (a) at least one silicone compound precursor and (b) least one silicate compound and/or at least one silicon oxide compound onto a major surface of the woven-or non-woven cloth or fabric comprising inorganic fibers;
(c) Allowing the silicone precursor composition to cure, thereby obtaining a two-layer article comprising a first layer comprising a woven or non-woven cloth or fabric comprising inorganic fibers, and second layer comprising (a) at least one silicone compound and/or at least one silicon oxide;
(d) Treating the major surface of the second layer opposite the major surface adjacent the first layer;
(e) Laminating an adhesive layeronto the corona-treated surface of the second layer; thereby obtaining a multilayer thermal protection article.

12. A battery, comprising at least one multilayer thermal protection article according to any one of claims 1 to 10.

13. The battery according to claim 12, wherein the at least one multilayer thermal protection article is located under the lid, between the cells, encapsulates the battery cells, and/or is comprised in the module cover and/or module housing.

14. The battery according to claim 12 or claim 13, wherein the battery is a lithium ion battery or a solid state battery, preferably a lithium ion battery.

15. Use of the multilayer thermal protection article according to any one of claims 1 to 10 for manufacturing a battery, preferably a lithium ion battery or a solid state battery, more preferably a lithium ion battery.
